# EUROPÄISCHE PATENTANMELDUNG

(11) **EP 4 491 823 A1**
(43) Veröffentlichungstag der Anmeldung: **15.01.2025**
(21) Anmeldenummer: 24187502.0
(22) Anmeldetag: 09.07.2024
(51) Int. Cl.: E04C 2/38, E04B 1/80, E04B 1/76, E04C 2/296

(54) **FASSADENMODUL, FASSADENMODULSYSTEM UND VERFAHREN ZUR HERSTELLUNG UND MONTAGE DES FASSADENMODULS**

(30) Priorität: 12.07.2023 DE 102023118498
(71) Anmelder: Detlef Lenschen Holding UG (haftungsbeschränkt), 47829 Krefeld (DE)
(72) Erfinder: Lenschen, Detlef, 47829 Krefeld (DE)
(74) Vertreter: Schulz Junghans Patentanwälte PartGmbB

(57) **Zusammenfassung**

Dier Erfindung betrifft ein Fassadenmodul (1) zur wärmetechnischen Isolierung einer Gebäudewand (40), umfassend einen Rahmen (2) aus einem Holzmaterial sowie vom Rahmen (2) umgeben und den Rahmen (2) ausfüllend Dämmmaterial (3).

## Beschreibung

Die Erfindung betrifft ein Fassadenmodul zur Wärmedämmung von Gebäuden, ein Fassadenmodulsystem und ein Verfahren zur Herstellung und Montage eines Fassadenmoduls.

Ein großer Anteil des Energieverbrauchs fällt auf den Gebäudesektor. Es ist daher anzustreben, dass im Gebäudesektor der CO₂-Ausstoß gemindert wird. Ein wichtiger Baustein hierfür stellt die energetische Gebäudesanierung und -dämmung dar.

Die bisherigen auf dem Markt angebotenen Elemente für serielle, energetische Sanierung unterscheiden sich kaum von den tragenden Außenwandelementen eines neu zu bauenden Holzhauses. Die hier angewendeten statischen und konstruktiven Methoden stammen aus dem traditionellen Holzbau, der sich, ebenso wie die heute zur energetischen Sanierung verwendeten Elemente, in den letzten Jahrzehnten nicht signifikant weiterentwickelt hat. Für eine solche Außenwand eines Holzhauses mit einer vorgehängten, hinterlüfteten Fassade und der notwendigen Tragkonstruktion inkl. Dämmung ist ein Eigengewicht von oft mehr als 100 kg/m² anzunehmen.

Dieses hohe Gewicht der Elemente führt in der Folge zu überhöhten Unterkonstruktionsanforderungen, einem notwendigen Transport mit Schwerlastfahrzeugen und Montage über große Autokrane - die wiederum Straßensperrungen, speziell zu errichtende Baustraßen und Gerüste erfordern. Zugleich bedarf es einer zeitaufwendigen Vormontage der Wandelemente in einer Zimmerei und es besteht für die Montage an die Bestandswand ein hoher Bedarf an hoch qualifizierten Fachkräften.

Es ist daher die Aufgabe der vorliegenden Erfindung, ein Fassadenmodul, ein dieses Fassadenmodul umfassendes Fassadenmodulsystem sowie ein Verfahren zur Herstellung und Montage des Fassadenmoduls zur Verfügung zu stellen, die in einfacher und kostengünstiger Weise Wärmedämmung von Gebäuden ermöglichen.

Diese Aufgabe wird durch ein Fassadenmodul nach Anspruch 1, ein Fassadenmodulsystem nach Anspruch 8, ein Verfahren zur Herstellung eines Fassadenmoduls nach Anspruch 9, ein Verfahren zur Montage von Fassadenmodulen zur Herstellung eines Fassadenmodulsystems nach Anspruch 10 sowie ein Computerprogramm nach Anspruch 13 gelöst.

Gemäß einem ersten Aspekt wird ein Fassadenmodul zur wärmetechnischen Isolierung einer Gebäudewand zur Verfügung gestellt. Das Fassadenmodul umfasst einen Rahmen aus einem Holzmaterial sowie vom Rahmen umgeben und den Rahmen ausfüllend Dämmmaterial. Unter Gebäudewand wird im Sinne der Erfindung auch ein Dach oder eine andere, nicht senkrechte Wand des Gebäudes verstanden.

In einer möglichen Ausführungsform weist das Fassadenmodul wenigstens eine Deckplatte zur Schließung der durch den Rahmen gebildeten Öffnung auf. Der Rahmen kann aus Leisten aus Leim-Verbundholz gefertigt sein, welche mittels mechanischer Verbindungselemente aneinander fixiert sind. Diese einzelnen Elemente des Rahmens bzw. seitlichen Verbundbretter können durch herkömmliche Nagelung, beispielsweise mittels einer Nagelpistole, zu einem Rahmen miteinander verbunden werden. Als Holzwerkstoff kann insbesondere Kiri-Holz oder auch Leimholz verwendet werden. Dabei können die Leisten des Rahmens eine Dicke von 20-30 mm aufweisen und eine Breite von 16-20 cm, zur Aufnahme von Dämmmaterial mit einer Dicke von 16 bis 20 cm. Diese Dicke kann je nach angestrebter Energieeffizienzklasse variiert werden. Das Fassadenmodul kann eine vordere Deckplatte zur Schließung der durch den Rahmen gebildeten Öffnung an der Vorderseite des Fassadenmoduls aufweisen und/ oder eine hintere zweite Deckplatte zur Schließung der durch den Rahmen gebildeten Öffnung an der Rückseite des Fassadenmoduls. Die Rückseite ist die Seite des Fassadenmoduls, die der zu verkleidenden Gebäudewand zugewandt ist, und die Vorderseite ist die der Rückseite abgewandte Seite des Fassadenmoduls. Die Deckplatte kann eine 5-10 mm starke Sperrholzplatte sein, die einseitig bündig an den Rahmen genagelt wird. Ebenso können hierfür Fassadenplatten aus Zement- oder Mineralfaser, Klinkerriemchen oder Keramikplatten verwendet werden.

In einer weiteren möglichen Ausführungsform ist das Fassadenmodul mit Dämmmaterial aus Zellulose- und/ oder Holzwolle ausgeführt.

Eine Ausführungsform sieht vor, dass das Fassadenmodul eine an einer Deckplatte angeordnete Unterspannbahn als Feuchteschutz aufweist. Das bedeutet, dass als Unterspannbahn beispielsweise eine Folie aus Ethylen-Propylen-Dien-(Monomer)-Kautschuk (EPDM) als Feuchteschutz auf die Oberfläche des nun geschlossenen Fassadenmoduls angebracht ist. Diese Unterspannbahn kann allseitig ca. 50 mm überlappend an den Seitenflächen des Fassadenmoduls befestigt werden.

In einer Ausführungsform ist es vorgesehen, dass das Fassadenmodul an einander gegenüberliegenden ersten Rahmenelementen an der Fassadenmodul-Außenseite jeweils mindestens ein Formschlusselement zur Ausbildung einer formschlüssigen mechanischen Verbindung aufweist. Dieses Formschlusselement ist so gestaltet, dass es mit einem hinsichtlich Form und Größe komplementär gestalteten Formschlusselement eines benachbart angeordneten Fassadenmoduls formschlüssig verbunden werden kann. Das Formschlusselement kann dergestalt ausgeführt sein, dass es eine Hinterschneidung ausbildet, die zum Eingreifen in eine Hinterschneidung eines Formschlusselements eines benachbart angeordneten Fassadenmoduls geeignet ist. wodurch beim Eingriff in das komplementär gestaltete Formschlusselement eine Blockade des translatorischen Freiheitsgrades des Fassadenmoduls in Bezug auf das benachbarte Fassadenmodul entlang der Richtung der Reihenanordnung der benachbarten Fassadenmodule erreicht wird. Zum Beispiel können die Formschlusselemente zur Ausbildung einer formschlüssigen mechanischen Verbindung mit einem Feder-Nut-System, mit einem Schwalbenschwanzprofil ausgestaltet sein. Beim Positionieren eines Fassadenmoduls in Bezug auf ein benachbartes Fassadenmodul wird durch die Herstellung der Feder-Nut-Verbindung das Fassadenmodul mit dem benachbarten Fassadenmodul in eine lotrechte und flächenbündige Positionierung gebracht. Daneben kann beispielsweise bedeuten, dass es sich waagerecht daneben befindet.

Gemäß einer Ausführungsform ist das Fassadenmodul so ausgestaltet, dass es eine viereckige Form aufweist, wobei es zwei einander gegenüberliegenden zweiten Rahmenelementen an der Fassadenmodul-Außenseite, die winklig zu den einander gegenüberliegenden ersten Rahmenelementen an der Fassadenmodul-Außenseite verlaufen, jeweils mindestens ein Positionierungselement zur Ausbildung einer formschlüssigen mechanischen Verbindung mit einem hinsichtlich Form und Größe komplementär gestalteten Positionierungselement eines benachbart angeordneten Fassadenmoduls aufweist. Dabei ist es möglich, dass das Positionierungselement ein Formelement aufweist, welches dazu eingerichtet ist, in einem hinsichtlich Form und Größe komplementär gestalteten Formelement eines Positionierungselements eines benachbart angeordneten Fassadenmoduls aufgenommen zu werden. Ebenso kann es dazu eingerichtet sein, ein hinsichtlich Form und Größe komplementär gestaltetes Formelement eines Positionierungselements eines benachbart angeordneten Fassadenmoduls aufzunehmen. Diese Ausgestaltung dient dazu, die Position des Fassadenmoduls in Bezug zum benachbarten Fassadenmodul festzulegen. Dadurch, dass jedoch ein Freiheitsgrad erhalten bleibt, kann ein Fassadenmodul entlang dieses Freiheitsgrades relativ zum benachbarten Fassadenmodul geführt verschoben werden, was das Ineinanderschieben während der Montage erleichtert. Mit dem erhaltenen Freiheitsgrad ist die Achse entlang der Längserstreckung der Seiten der Fassadenmodule gemeint, die mittels Positionierungselemente in Kontakt stehen. Ein Positionierungselement kann in das jeweilige seitliche Rahmenelement eingefräst sein.

Gemäß einer weiteren Ausführungsform ist das Fassadenmodul so ausgestaltet, dass die Größe des Fassadenmoduls in seiner maximalen Erstreckung in einer Koordinatenrichtung ein Längenmaß von maximal 1,20 m aufweist. Die Breite des Fassadenmoduls kann dabei beispielsweise 0,3 m bis 0,6 m betragen, wie z.B. 0,50 m.

Ein jeweiliges Fassadenmodul kann dabei ein geringes Gewicht aufweisen, wie z.B. 8-14 kg, beispielsweise 10-12 kg, welches die Montage durch nur eine Person und ohne Schwerlastkran ermöglicht. Das Gewicht des Fassadenmodulsystems ist nur in etwa ein Drittel des Gewichst eines herkömmlichen Fassadenmodulsystems.

Außerdem kann das Fassadenmodul in seiner Länge und/ oder seiner Breite dem oktametrischen Maßsystem entsprechen, welches in der DIN 4172 geregelt ist. Ein Längenmaß gemäß dem oktametrischen Maßsystem kann z.B. 0,625 m betragen. Des Weiteren ist nicht ausgeschlossen, dass auch die Dicke des Fassadenmoduls dem oktametrischen Maßsystem entspricht.

Nach einem weiteren Aspekt der Erfindung wird ein Fassadenmodulsystem zur Verfügung gestellt, welches mehrere in zumindest einer Reihenanordnung angeordnete beschriebene Fassadenmodule aufweist. Das Fassadenmodulsystem kann eine Unterkonstruktion aus Kanthölzern umfassen, an denen die Fassadenmodule beispielsweise über Verschraubungen befestigt sein können. Die Unterkonstruktion kann beispielsweise 80x80mm starke Vierkanthölzern und Metallwinkel umfassen. Durch die Unterkonstruktion wird ein Luftraum zwischen dem Fassadenmodulsystem und der zu verkleidenden Gebäudewand gewährleistet.

Zur Verbindung der Fassadenmodule untereinander sind an den senkrechten Seiten der Fassadenmodule Formschlusselemente und an den waagerechten Seiten Positionierungselemente vorgesehen. Durch die Positionierungselemente ist ein senkrechter Abstand der Fassadenmodule zueinander von 5 - 10 mm einstellbar.

Alternativ oder hinzukommend können die Positionierungselemente auch an senkrechten Seiten der Fassadenmodule vorgesehen sein und damit einen waagerechten Abstand der Fassadenmodule zueinander einstellen, gegebenenfalls mit demselben Spaltmaß wie in den senkrechten Abständen.

Ebenso entsteht durch die Materialstärke der Positionierungselemente zwischen den Modulen der horizontalen Ebene ein Spalt von z.B. 8mm. Auf den seitlichen Flächen können, auf den zur Fassade hin gerichteten Kanten, umlaufend wasserdichte Fugendichtelemente, z.B. in Form von sogenannten Kompri-Quellbändern, angebracht sein, die ein Eindringen von Spritzwasser in die Modulebene verhindern. Ebenso können diese auf den von der Fassade fort zeigenden Kanten angebracht sein. Um auch die waagerechte Fuge zwischen den benachbarten Fassadenmodulen abzudichten, kann auf den Nut-Federseiten des Moduls ebenso ein wasserdichtes Fugendichtelement, z.B. in Form eines sogenannten Kompri-Quellbands, angebracht sein.

Gemäß einem weiteren Aspekt der Erfindung wird ein Verfahren zur Herstellung eines Fassadenmoduls zur Verfügung gestellt, bei dem der Rahmen aus Holzmaterial bereitgestellt wird und Dämmmaterial in den zumindest einseitig offenen Rahmen maschinell eingeblasen wird. Das Dämmmaterial kann eine Zellulose- und/ oder Holzwolledämmung sein, die beispielsweise in den einseitig offenen und mit einer Deckplatte einseitig geschlossenen Rahmen maschinell eingeblasen wird. Danach kann die einseitige Öffnung des Fassadenmoduls mittels einer Deckplatte geschlossen werden. Beispielsweise kann diese Deckplatte bündig an den Rahmen genagelt oder geschraubt werden und eine 5-10 mm starke Sperrholzplatte sein.

Die Deckplatte ist so groß wie die endgültigen Außenmaße des Fassadenmoduls.

Ein weiterer Aspekt der Erfindung ist ein Verfahren zur Montage von Fassadenmodulen zur Herstellung eines Fassadenmodulsystems zwecks wärmetechnischer Isolierung einer Gebäudewand. Bei dem Verfahren werden mehrere beschriebene Fassadenmodule in zumindest einer Reihenanordnung an einer Unterkonstruktion befestigt.

Nach einer Ausführungsform des Verfahrens zur Montage von Fassadenmodulen ist vorgesehen, dass eine optische Vermessung von der zu isolierenden Gebäudewand erfolgt und daraus erhaltene Daten zur Erstellung eines Verlegeplans genutzt werden. Eine optische Vermessung kann ein 3D-Scan der Gebäudewand sein. Beispielsweise kann diese mit einer Flug-Drohne durchgeführt werden. Mittels einer speziellen Software wird dann ein Verlegeplan aus den erhaltenen Daten generiert, wie z.B. ein digitaler Verlegeplan. Der generierte Verlegeplan kann neben der Positionierung und Dimensionierung der Fassadenmodule ebenso die Ausgestaltung der Unterkonstruktion umfassen. Die Software kann auch dafür genutzt werden, den Bedarf an maßlichen Sondermodellen von Fassadenmodulen zu erkennen und die Anzahl und Maße dieser Sondermodelle auszugeben.

In einer Ausführungsform des Verfahrens zur Montage von Fassadenmodulen ist vorgesehen, dass wenigstens einige der Fassadenmodule des Fassadenmodulsystems eine auslesbare Kennung erhalten, die entsprechenden Positionen im Verlegeplan zugeordnet sind, und die bei der Montage der Fassadenmodule ausgelesen werden. Die auslesbare Kennung kann dabei eine digitale Signatur sein, wie z.B. ein QR-Code oder Micro-Impulssender. Mittels dieser Kennung bzw. Signatur ist es möglich, dass eine eindeutige Zuordnung einer Position im Verlegeplan zu einem bestimmten Modul erfolgt. Dies erleichtert wesentlich die Montage der Fassadenmodule, da somit in einfacher Weise jedes der markierten Fassadenmodule an einer ihm per Verlegeplan zugewiesenen Position fixiert werden kann. Dies ermöglicht insbesondere wiederum auch die maschinelle Montage der Module an der Gebäudewand. Des Weiteren kann nach der Montage wenigstens einiger Fassadenmodule eine erneute optische Erfassung der Gebäudewand erfolgen, wie zum Beispiel ein erneutes Scannen der Gebäudewand, an der sich einige Fassadenmodule befinden, um den Verlegeplan automatisiert zu aktualisieren.

Der aktualisierte Verlegeplan begleitet somit den Monteur über die gesamten Montagearbeiten bis zur Fertigstellung - hierdurch wird die Qualität der Werksfertigung auch auf die Baustelle übertragen.

Dieses System der Montage -Anleitung/-Kontrolle befähigt auch den ungelernten Bauherren dazu, diese Module als Fassadendämmung in Eigenleistung zur Gebäudeisolation zu verwenden. Zudem ermöglicht es der digitale Verlegeplan, dass auch ein Montage-Roboter die Erstellung des Fassadenmodulsystems ausführen kann.

Nach einem weiteren Aspekt der Erfindung ist ein Computerprogramm vorgesehen. Dieses Computerprogramm kann in den internen Speicher eines digitalen Computers geladen werden und umfasst einen Computerprogrammcode, der, wenn er auf dem digitalen Computer ausgeführt wird, den Schritt der Verarbeitung von aus der optischen Vermessung erhaltenen Daten zur Erstellung eines Verlegeplans von beschriebenen Fassadenmodulen zur Herstellung eines beschriebenen Fassadenmodulsystems durchzuführen.

Das erfindungsgemäße Fassadenmodul und das Fassadenmodulsystem werden im Folgenden anhand der in den beiliegenden Zeichnungen dargestellten Ausführungsbeispiele näher erläutert. Es zeigen:
Fig. 1 in einer schematischen Explosionsdarstellung das Fassadenmodul;
Fig. 2 in einer horizontalen Schnittansicht das Fassadenmodul;
Fig. 3 in einer horizontalen Schnittansicht das Fassadenmodulsystem;
Fig. 4 in einer vertikalen Schnittansicht einen Teil des Fassadenmodulsystems und
Fig. 5 in einer vertikalen Schnittansicht das Fassadenmodulsystem

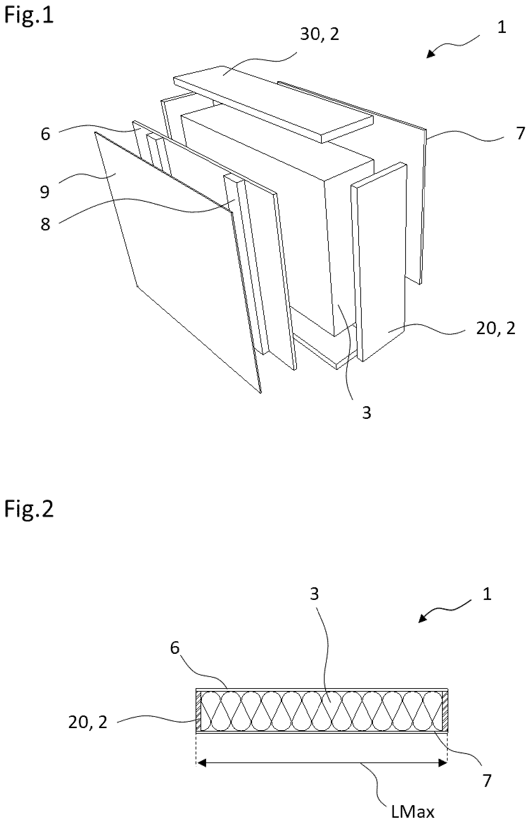

In Fig. 1 ist das Fassadenmodul 1 in einer schematischen Explosionsdarstellung dargestellt. Das Fassadenmodul 1 ist quaderförmig und weist an vier Seiten einen Rahmen 2 auf, der zwei vertikal verlaufende erste Rahmenelemente 20 und zwei horizontal verlaufende zweite Rahmenelemente 30 umfasst. Vom Rahmen 2 ist Dämmmaterial 3 seitlich umgeben. Die vom Rahmen 2 nicht umschlossenen Seiten des Dämmmaterials 3 sind von einer Deckplatte 6 an der Vorderseite des Fassadenmoduls 1 sowie von einer zweiten Deckplatte 7 an der Hinterseite des Fassadenmoduls 1 abgedeckt. Vorderseite bedeutet, dass die Seite in montiertem Zustand an der der Gebäudewand abgewandten Seite des Fassadenmoduls 1 angeordnet ist. Hinterseite bedeutet, dass die Seite im montierten Zustand der Gebäudewand zugewandt ist. An der Deckplatte 6 ist die Unterkonstruktion der Fassadenplatte 8 in Form zweier vertikaler Holzlatten sowie darauf die Fassadenplatte 9 angeordnet.

In Fig. 2 ist das Fassadenmodul 1 in einer horizontalen Schnittansicht ohne Fassadenplatte dargestellt. Auf der in dieser Ansicht rechten und linken Seite wird das Dämmmaterial 3 von ersten Rahmenelementen 20 eingefasst, welche Bestandteile des Rahmens 2 sind. Die anderen beiden Seiten des Dämmmaterials 3 sind durch die horizontal verlaufende Deckplatte 6 und die zweite Deckplatte 7 eingefasst. In horizontaler Richtung ist die maximale Erstreckung LMax des Fassadenmoduls 1 dargestellt.

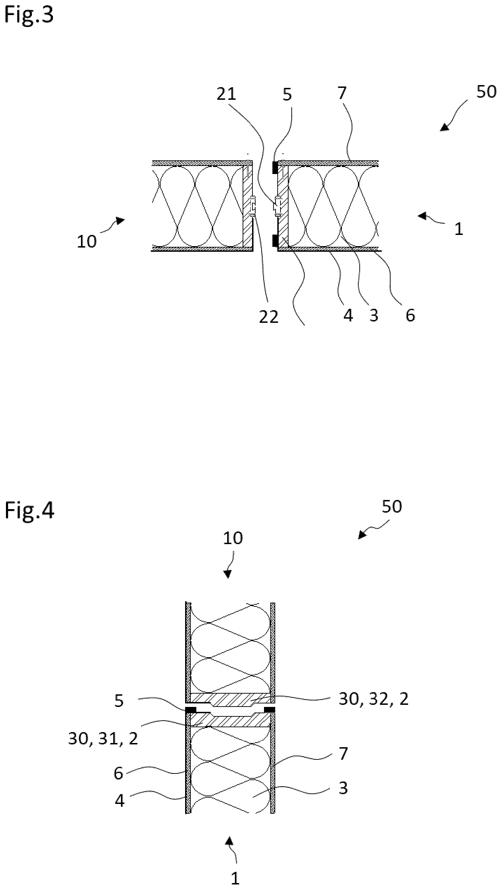

In Fig. 3 ist das Fassadenmodulsystem 50 in einer horizontalen Schnittansicht ohne Fassadenplatte in unmontiertem Zustand dargestellt. Zu sehen ist auf der rechten Seite der Darstellung ein Bereich des Fassadenmoduls 1 sowie auf der linken Seite der Darstellung ein Bereich des benachbart angeordneten Fassadenmoduls 10. Beide Fassadenmodule sind identisch aufgebaut und bilden im Verbund ein Teil des Fassadenmodulsystems 50. Das Fassadenmodul 1 umfasst das Dämmmaterial 3, das von der in dieser Ansicht horizontal verlaufenen Deckplatte 6 und der zweiten Deckplatte 7 begrenzt wird. Im montierten Zustand des Fassadenmodulsystems 50 an einer Gebäudewand befindet sich die Deckplatte 6 auf der der Gebäudewand abgewandten Seite und die zweite Deckplatte 7 auf der der Gebäudewand zugewandten Seite. Auf der Seite der Deckplatte 6 ist eine Unterspannbahn 4 am Fassadenmodul 1 angeordnet, die dem Feuchteschutz dient.

Vom Fassadenmodul 1 ist hier nur eines der in montiertem Zustand vertikal verlaufenden ersten Rahmenelemente 20 dargestellt. Um eine formschlüssige Verbindung zwischen dem Fassadenmodul 1 und dem benachbart angeordneten Fassadenmodul 10 zu ermöglichen, ist am ersten Rahmenelement 20 des Fassadenmoduls 1 ein Formschlusselement 21 angeordnet. Auf dem zum Fassadenmodul 1 ausgerichteten ersten Rahmenelement 20 des benachbart angeordneten Fassadenmoduls 10 ist ein hierzu komplementär gestaltetes Formschlusselement 22 angeordnet, welche dazu eingerichtet ist, mit dem Formschlusselement 21 eine formschlüssige Verbindung zu bilden. Die Formschlusselemente 21, 22 sind hier mit einem komplementären Schwalbenschwanzprofil ausgeführt. Um die Verbindungsstelle zwischen dem Fassadenmodul 1 und dem benachbarten Fassadenmodul 10 abzudichten, sind auf deren zueinander ausgerichteten Seiten Dichtungselemente 5 angeordnet.

In Fig. 4 ist das Fassadenmodulsystem 50 in einer vertikalen Schnittansicht ohne Fassadenplatte in unmontiertem Zustand dargestellt. Zu sehen ist auf der unteren Seite der Darstellung ein Bereich des Fassadenmoduls 1 sowie auf der oberen Seite der Darstellung, ein Bereich des benachbart angeordneten Fassadenmoduls 10. Beide Fassadenmodule sind identisch aufgebaut und bilden im Verbund ein Teil des Fassadenmodulsystems 50. Das Fassadenmodul 1 umfasst das Dämmmaterial 3, das von der in dieser Ansicht vertikal verlaufenen Deckplatte 6 und der zweiten Deckplatte 7 begrenzt ist. Im montierten Zustand des Fassadenmodulsystems 50 an einer Gebäudewand befindet sich die Deckplatte 6 auf der von einer Gebäudewand abgewandte Seite und die zweite Deckplatte 7 auf der der Gebäudewand zugewandten Seite. Auf der Seite der Deckplatte 6 ist eine Unterspannbahn 4 am Fassadenmodul 1 angeordnet, die dem Feuchteschutz dient.

Am Fassadenmodul 1 ist nur eines der in montiertem Zustand horizontal verlaufenden zweiten Rahmenelemente 30 dargestellt. Um eine lotgerechte Positionierung des benachbart angeordneten Fassadenmoduls 10 auf dem Fassadenmodul 1 zu ermöglichen und eine Verschiebung der Fassadenmodule untereinander entlang einer Richtung orthogonal zur Gebäudewand zu verhindern, weist das zweite Rahmenelement 30 des Fassadenmoduls 1 ein Positionierungselement 31 auf, welches eine Ausnehmung aufweist. An dem zum Fassadenmodul 1 ausgerichteten zweiten Rahmenelement 30 des benachbart angeordneten Fassadenmoduls 10 ist ein hierzu komplementär gestaltetes Positionierungselement 32 angeordnet, welches ein zur Ausnehmung des Positionierungselements 31 komplementäres Formelement aufweist. Um die Verbindungstelle zwischen dem Fassadenmodul 1 und dem darüberliegenden benachbarten Fassadenmodul 10 abzudichten, sind auf deren zueinander ausgerichteten Seiten Dichtungselemente 5 angeordnet.

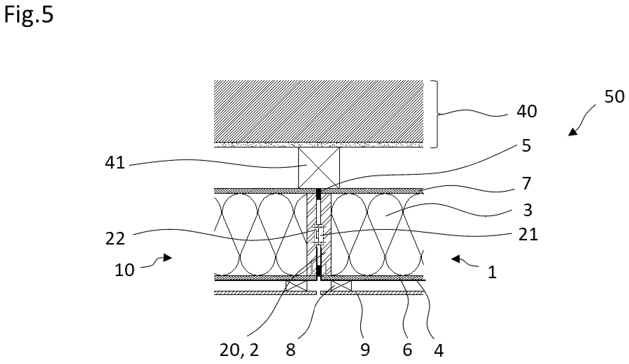

In Fig. 5 ist das Fassadenmodulsystem 50 in einer horizontalen Schnittansicht mit Fassadenplatte 9 in montiertem Zustand dargestellt. Im oberen Bereich der Darstellung ist eine Gebäudewand 40 dargestellt, auf die das Fassadenmodulsystem 50 umfassend die Unterkonstruktion 41 montiert ist. Zu sehen ist ein Bereich des Fassadenmoduls 1 sowie links davon angeordnet, ein Bereich des benachbart angeordneten Fassadenmoduls 10. Durch die Unterkonstruktion 41 ist das Fassadenmodul 1 sowie das benachbart angeordnete Fassadenmodul 10 zur Gebäudewand beabstandet angeordnet. Beide Fassadenmodule 1, 10 sind identisch aufgebaut und bilden im Verbund ein Teil des Fassadenmodulsystems 50. Ein jeweiliges Fassadenmodul 1, 10 umfasst das Dämmmaterial 3, das von der in dieser Ansicht horizontal verlaufenen Deckplatte 6 und der zweiten Deckplatte 7 begrenzt wird. An der der Gebäudewand abgewandten Seite des Fassadenmoduls befindet sich die Deckplatte 6, an der der Gebäudewand abgewandten Seite befindet sich die zweite Deckplatte 7. Das Fassadenmodul 1 weist eine Unterspannbahn 4 auf, die dem Feuchteschutz dient und die sich auf der Außenseite der Deckplatte 6 erstreckt. Auf der Seite der Deckplatte 6 ist eine Fassadenplatte 9 angeordnet, welche durch eine Unterkonstruktion der Fassadenplatte 8 zur Deckplatte 6 beabstandet ist. Von einem jeweiligen Fassadenmodul 1, 10 ist hier nur eines der in montiertem Zustand vertikal verlaufenden ersten Rahmenelemente 20 dargestellt. Um eine formschlüssige Verbindung zwischen dem Fassadenmodul 1 und dem benachbart angeordneten Fassadenmodul 10 zu ermöglichen, ist am ersten Rahmenelement 20 des Fassadenmoduls 1 ein Formschlusselement 21 angeordnet. Auf dem zum Fassadenmodul 1 ausgerichteten ersten Rahmenelement 20 des benachbart angeordneten Fassadenmoduls 10 ist ein hierzu komplementär gestaltetes Formschlusselement 22 angeordnet, das mit dem Formschlusselement 21 eine formschlüssige Verbindung bildet. Um die Verbindungsstelle zwischen dem Fassadenmodul 1 und dem benachbarten Fassadenmodul 10 abzudichten, sind auf deren zueinander ausgerichteten Seiten Dichtungselemente 5 angeordnet, welche komprimiert dargestellt sind.

**Bezugszeichenliste**

| | |
|---|---|
| Fassadenmodul | 1 |
| Rahmen | 2 |
| Dämmmaterial | 3 |
| Unterspannbahn | 4 |
| Dichtungselement | 5 |
| Deckplatte | 6 |
| Zweite Deckplatte | 7 |
| Unterkonstruktion der Fassadenplatte | 8 |
| Fassadenplatte | 9 |
| benachbart angeordnetes Fassadenmodul | 10 |
| Erstes Rahmenelement | 20 |
| Formschlusselement | 21 |
| Komplementär gestaltetes Formschlusselement | 22 |
| zweites Rahmenelement | 30 |
| Positionierungselement | 31 |
| Komplementär gestaltetes Positionierungselement | 32 |
| Gebäudewand | 40 |
| Unterkonstruktion | 41 |
| Fassadenmodulsystem | 50 |
| benachbart angeordnetes Fassadenmodul | 51 |
| Maximale Erstreckung | LMax |

## Patentansprüche

1. Fassadenmodul (1) zur wärmetechnischen Isolierung einer Gebäudewand (40), umfassend einen Rahmen (2) aus einem Holzmaterial sowie vom Rahmen (2) umgeben und den Rahmen (2) ausfüllend Dämmmaterial (3).

2. Fassadenmodul (1) nach Anspruch 1, dass das Fassadenmodul (1) wenigstens eine Deckplatte (6) aufweist zur Schließung der durch den Rahmen (2) gebildeten Öffnung.

3. Fassadenmodul (1) nach einem der vorhergehenden Ansprüche, **dadurch gekennzeichnet, dass** das Dämmmaterial (3) eine Zellulose- und/ oder Holzwolledämmung ist.

4. Fassadenmodul (1) nach einem der vorhergehenden Ansprüche, **dadurch gekennzeichnet, dass** das Fassadenmodul (1) eine an einer Deckplatte (6) angeordnete Unterspannbahn (4) als Feuchteschutz aufweist.

5. Fassadenmodul (1) nach einem der vorhergehenden Ansprüche, **dadurch gekennzeichnet, dass** das Fassadenmodul (1) an einander gegenüberliegenden ersten Rahmenelementen (20) an der Fassadenmodul-Außenseite jeweils mindestens ein Formschlusselement (21) zur Ausbildung einer formschlüssigen mechanischen Verbindung mit einem hinsichtlich Form und Größe komplementär gestalteten Formschlusselement (22) eines benachbart angeordneten Fassadenmoduls (10) aufweist.

6. Fassadenmodul (1) nach einem der vorhergehenden Ansprüche, **dadurch gekennzeichnet, dass** das Fassadenmodul (1) eine viereckige Form aufweist, wobei an zwei einander gegenüberliegenden zweiten Rahmenelementen (30) an der Fassadenmodul-Außenseite, die winklig zu den einander gegenüberliegenden ersten Rahmenelementen (20) an der Fassadenmodul-Außenseite verlaufen, jeweils mindestens ein Positionierungselement (31) zur Ausbildung einer formschlüssigen mechanischen Verbindung mit einem hinsichtlich Form und Größe komplementär gestalteten Positionierungselement (32) eines benachbart angeordneten Fassadenmoduls (10) aufweist.

7. Fassadenmodul (1) nach einem der vorhergehenden Ansprüche, **dadurch gekennzeichnet, dass** die Größe des Fassadenmodul in seiner maximalen Erstreckung (4) ein Maß von maximal 1,20 m aufweist.

8. Fassadenmodulsystem (1), umfassend mehrere in zumindest einer Reihenanordnung angeordnete Fassadenmodule (1) gemäß einem der Ansprüche 1 bis 7.

9. Verfahren zur Herstellung eines Fassadenmoduls (1) gemäß einem der Ansprüche 1-7, bei dem der Rahmen (2) aus Holzmaterial bereitgestellt wird und Dämmmaterial (3) in den zumindest einseitig offenen Rahmen (2) maschinell eingeblasen wird.

10. Verfahren zur Montage von Fassadenmodulen (1) zur Herstellung eines Fassadenmodulsystems (50) gemäß Anspruch 8 zwecks wärmetechnischer Isolierung einer Gebäudewand (40), bei dem mehrere Fassadenmodule (1) gemäß zumindest einem der Ansprüche 1 bis 7 in zumindest einer Reihenanordnung an einer Unterkonstruktion (41) befestigt werden.

11. Verfahren zur Montage von Fassadenmodulen (1) nach Anspruch 10, **dadurch gekennzeichnet, dass** eine optische Vermessung von der zu isolierenden Gebäudewand (40) erfolgt und daraus erhaltene Daten zur Erstellung eines Verlegeplans genutzt werden.

12. Verfahren zur Montage von Fassadenmodulen (1) nach Anspruch 11, **dadurch gekennzeichnet, dass** wenigstens einige der Fassadenmodule (1) des Fassadenmodulsystems (50) eine auslesbare Kennung erhalten, die entsprechenden Positionen im Verlegeplan zugeordnet sind, und die bei der Montage der Fassadenmodule (1) ausgelesen werden.

13. Computerprogramm, das in den internen Speicher eines digitalen Computers geladen werden kann und das einen Computerprogrammcode umfasst, der, wenn er auf dem digitalen Computer ausgeführt wird, den Schritt der Verarbeitung von aus der optischen Vermessung erhaltenen Daten zur Erstellung eines Verlegeplans von Fassadenmodulen (1) gemäß einem der Ansprüche 1 bis 7 zur Herstellung eines Fassadenmodulsystems (50) gemäß Anspruch 8 durchzuführen.
